# EUROPEAN PATENT APPLICATION

(11) **EP 4 722 927 A1**
(43) Date of publication of application: **08.04.2026**
(21) Application number: 24847974.3
(22) Date of filing: 10.07.2024
(51) Int. Cl.: G06F 12/0811

(54) **CACHE, DATA PROCESSING APPARATUS AND CHIP**

(30) Priority: 28.07.2023 CN 202310946874
(71) Applicant: Sanechips Technology Co., Ltd., Shenzhen, Guangdong 518055 (CN)
(72) Inventor: LI, Peng, Shenzhen, Guangdong 518055 (CN)
(74) Representative: Canzler & Bergmeier Patentanwälte Partnerschaft mbB
(86) International application number: PCT/CN2024/104629
(87) International publication number: WO 2025/026015

(57) **Abstract**

The present disclosure provides a cache, including at least two layer structures, each of the at least two layer structures includes: a first cache unit and a second cache unit, first cache access instructions of different layer structures enter different pipelines to access the first cache units in corresponding layer structures, and second cache access instructions of the different layer structures enter different pipelines to access the second cache units in corresponding layer structures.

## Description

### CROSS REFERENCE TO RELATED APPLICATIONS

The present disclosure claims the priority to Chinese Patent Application No. 202310946874.5 filed with the CNIPA on July 28, 2023, the contents of which are incorporated herein by reference in their entirety.

### TECHNICAL FIELD

The present disclosure relates to the field of computer processing technology, and in particular, to a cache, a data processing apparatus, and a chip.

### BACKGROUND

In a microarchitecture of a Central Processing Unit (CPU), instruction execution and cache access in the CPU undergo four stages of pipelines, and each stage of pipeline is one clock cycle. Under the limited execution pipelines, cache capacity of the CPU is limited by frequency improvement and power consumption optimization, and becomes one of the main bottlenecks restricting performance improvement of the CPU.

### SUMMARY

The present disclosure provides a cache, a data processing apparatus, and a chip.

In a first aspect, an embodiment of the present disclosure provides a cache, including at least two layer structures, each of the at least two layer structures includes: a first cache unit and a second cache unit, first cache access instructions of different layer structures enter different pipelines to access the first cache units in corresponding layer structures, and second cache access instructions of the different layer structures enter different pipelines to access the second cache units in corresponding layer structures.

In another aspect, an embodiment of the present disclosure further provides a data processing apparatus, including the above cache.

In still another aspect, an embodiment of the present disclosure further provides a chip, including the above cache.

### BRIEF DESCRIPTION OF DRAWINGS

FIG. 1 is a schematic diagram illustrating a cache access instruction entering pipelines in the related art;
FIG. 2 is a first schematic structural diagram of a cache according to an embodiment of the present disclosure;
FIG. 3 is a second schematic structural diagram of a cache according to an embodiment of the present disclosure;
FIG. 4 is a schematic diagram of a cache including two layer structures according to an embodiment of the present disclosure;
FIG. 5 is a schematic diagram of a cache including three layer structures according to an embodiment of the present disclosure; and
FIG. 6 is a schematic structural diagram of a data processing apparatus and a chip according to an embodiment of the present disclosure.

### DETAIL DESCRIPTION OF EMBODIMENTS

Exemplary embodiments of the present disclosure will be described more fully below with reference to the drawings, but the exemplary embodiments described herein may be embodied in different forms and should not be interpreted as being limited to embodiments described herein. Rather, the embodiments are provided to make the present disclosure thorough and complete, and are intended to enable those of ordinary skill in the art to fully understand the scope of the present disclosure.

The term "and/or" used herein includes one associated listed item or any and all combinations of more than one associated listed items.

The terms used herein are merely used to describe specific embodiments, and are not intended to limit the present disclosure. As used herein, "a" and "the" which indicate a singular form are intended to include a plural form, unless expressly stated in the context. It should be further understood that the term(s) "comprise" and/or "be made of" used herein indicate(s) the presence of the described features, integers, operations, elements and/or components, but do not exclude the presence or addition of one or more other features, integers, operations, elements, components and/or combinations thereof.

The embodiments of the present disclosure can be described with reference to plans and/or cross-sectional views with the aid of idealized schematic diagrams of the present disclosure. Accordingly, the exemplary drawings may be modified according to manufacturing techniques and/or tolerances. The embodiments are not limited to those illustrated by the drawings, but include modifications to configuration formed based on a manufacturing process. Thus, regions shown in the drawings are illustrative, and shapes of the regions shown in the drawings illustrate specific shapes of regions of elements, but are not intended to make limitations.

Unless otherwise defined, all terms (including technical and scientific terms) used herein have the same meaning as commonly understood by those of ordinary skill in the art. It should be further understood that terms, such as those defined in commonly use d dictionaries, should be interpreted as having a meaning that is consistent with a meaning in the context of the related technology and the background of the present disclosure, and should not be interpreted in an idealized or overly formal sense unless expressly so defined herein.

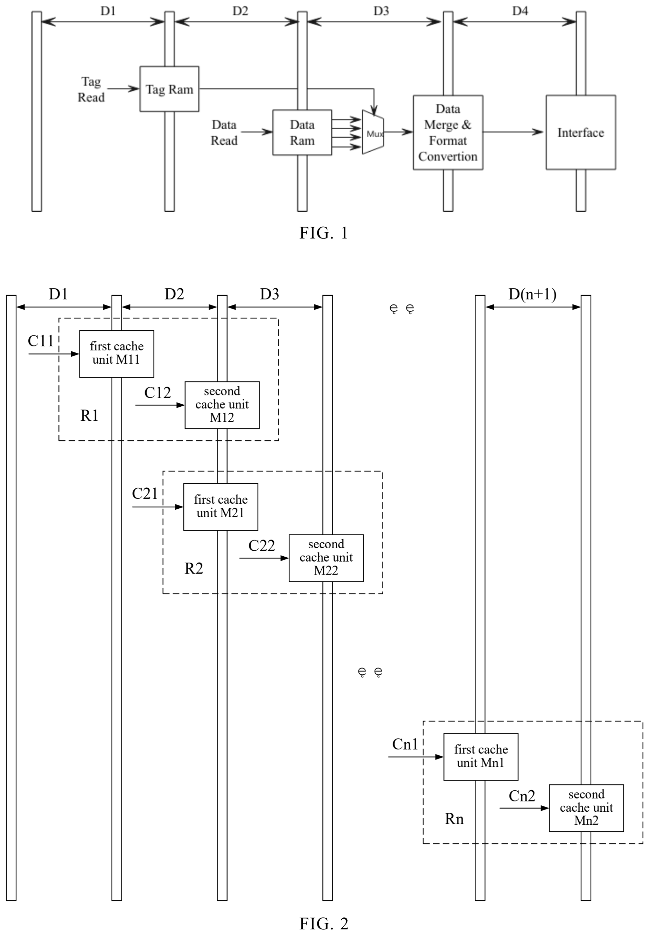

FIG. 1 is a schematic diagram illustrating a cache access instruction entering pipelines in the related art. As shown in FIG. 1, pipeline D1 to D4 are four stages of pipelines for instruction execution and cache access in a CPU, and each stage of pipeline is one clock cycle. A cache includes a physical address memory (Tag Ram), a data memory (Data Ram), a data merging and format conversion unit (Data Merge & Format Conversion) and an interface unit (Interface). The physical address memory is a physical module configured to store physical addresses and cache status information. The data memory is a physical module configured to store data. The data merging and format conversion unit is configured to perform data merging and format conversion. The interface unit is configured to transmit data subjected to data merging and format conversion to other devices or modules. A cache unit of the cache includes two parts, i.e., the physical address memory and the data memory. A process of a load instruction or a store instruction entering pipelines of the cache for execution is illustrated in FIG. 1, and includes stages D1 to D4.

In stage D1, the physical address memory is read according to a cache access instruction Tag Read.

In stage D2, the data memory is read according to a cache access instruction Data Read.

In stage D3, data output by the data memory is selected based on physical address information output by the physical address memory, and the data output by the data memory is subjected to operations such as data merging and format conversion.

In stage D4, the data subjected to data merging and format conversion is sent to the interface unit.

A high-performance CPU takes 3 GHz as a main goal, so the four stages of pipelines (D1 to D4) are faced with the following bottlenecks: in stage D1, a large number of input signals are input to the physical address memory, resulting in limitation to frequency improvement; in stage D2, the physical address memory has a relatively large load, resulting in limitation to frequency improvement; in stage D3, the data memory has a relatively large load, a large number of logic levels is derived from merging and format conversion, resulting in limitation to frequency improvement; and in stage D4, when the data is finally output to an interface, the data has a relatively large bit width, so that a long placement and routing distance is needed, resulting in limitation to frequency improvement.

Therefore, under the limited execution pipelines, cache capacity of the CPU is limited by frequency improvement and power consumption optimization, and becomes one of the main bottlenecks restricting performance improvement of the CPU.

In view of the above problems, the embodiments of the present disclosure improve the cache structure and the pipelines to expand the cache capacity. The cache includes at least two layer structures, each layer structure includes a first cache unit and a second cache unit, first cache access instructions of different layer structures enter different pipelines to access the first cache units in corresponding layer structures, and second cache access instructions of the different layer structures enter different pipelines to access the second cache units in corresponding layer structures.

FIG. 2 is a first schematic structural diagram of a cache according to an embodiment of the present disclosure. As shown in FIG. 2, the number of the layer structures is n, n≥2, that is, the cache may include a first layer structure R1, a second layer structure R2, ..., and an n^{th} layer structure Rn, and the layer structures include same elements and have same structure. The first layer structure R1 includes a first cache unit M11 and a second cache unit M12, the second layer structure R2 includes a first cache unit M21 and a second cache unit M22, ..., and the n^{th} layer structure Rn includes a first cache unit Mn1 and a second cache unit Mn2.

If the cache capacity is simply expanded, the timing is not convergent (resulting in frequency reduction), and processing performance cannot be improved. By enabling the cache access instruction of each layer structure to independently access the respective cache unit in a staggered beat, the problem of frequency reduction caused by simply expanding the cache capacity can be effectively solved. Meanwhile, the number (n-1) of the expanded layer structures can be customized according to actual application requirements, a total capacity of the expanded cache is n times that of a cache having a single layer structure, so that product application flexibility and universality of the cache structure are improved.

The cache provided in the embodiments of the present disclosure includes at least two layer structures, each layer structure includes the first cache unit and the second cache unit, the first cache access instructions of different layer structures enter different pipelines to access the first cache units in corresponding layer structures, and the second cache access instructions of the different layer structures enter different pipelines to access the second cache units in corresponding layer structures. The cache provided in the embodiments of the present disclosure includes a plurality of layer structures, so that the cache capacity can be expanded, data hit rate can be increased, and overall CPU performance can be improved. Moreover, the cache access instruction of each layer structure independently accesses the respective cache unit in a staggered beat, which can ensure processing efficiency of the cache and power consumption optimization.

In some embodiments, sequence numbers of the pipelines entered by the first cache access instruction of each layer structure gradually increase, and sequence numbers of the pipelines entered by the second cache access instruction of each layer structure gradually increase. That is, each layer structure may be sequentially staggered in the order of the pipelines.

In order to further improve frequency, two adjacent layer structures may be staggered by one pipeline. That is, when the pipeline entered by the first cache access instruction C21 of the second layer structure is D2, the pipeline entered by the first cache access instruction C11 of the first layer structure is D1, with D2 being the pipeline immediately following D1; when the pipeline entered by the second cache access instruction C22 of the second layer structure is D3, the pipeline entered by the second cache access instruction C12 of the first layer structure is D2, with D3 being the pipeline immediately following D2. Thus, in some embodiments, the pipeline entered by the first cache access instruction of the n^{th} layer structure is the pipeline immediately following the pipeline entered by the first cache access instruction of the (n-1)^{th} layer structure; and the pipeline entered by the second cache access instruction of the n^{th} layer structure is the pipeline immediately following the pipeline entered by the second cache access instruction of the (n-1)^{th} layer structure.

In some embodiments, each layer structure further includes a data selection unit, a data processing unit (i.e., a data merging and format conversion unit), and an interface unit. The data selection unit of each layer structure is configured to perform selection on second data based on first data to obtain target data, with the first data obtained by accessing the first cache unit in a corresponding layer structure according to the first cache access instruction of the layer structure, and the second data obtained by accessing the second cache unit in the layer structure according to the second cache access instruction of the layer structure. That is, for each layer structure, physical addresses of a plurality of channels are output by the second cache unit in the layer structure at the same time, and are compared with a physical address output by the first cache unit in the layer structure, and the channel output data from the second cache unit which has a comparison result being equal is selected as the target data. In addition, the data output by the second cache unit is merged with data from other sources, and is then subjected to operations such as storage format to register format conversion, endianness conversion, and symbol conversion. The data processing unit is configured to merge the target data with third data (i.e. the data from the other sources), perform format conversion on the merged data to obtain fourth data, and send the fourth data to the interface unit.

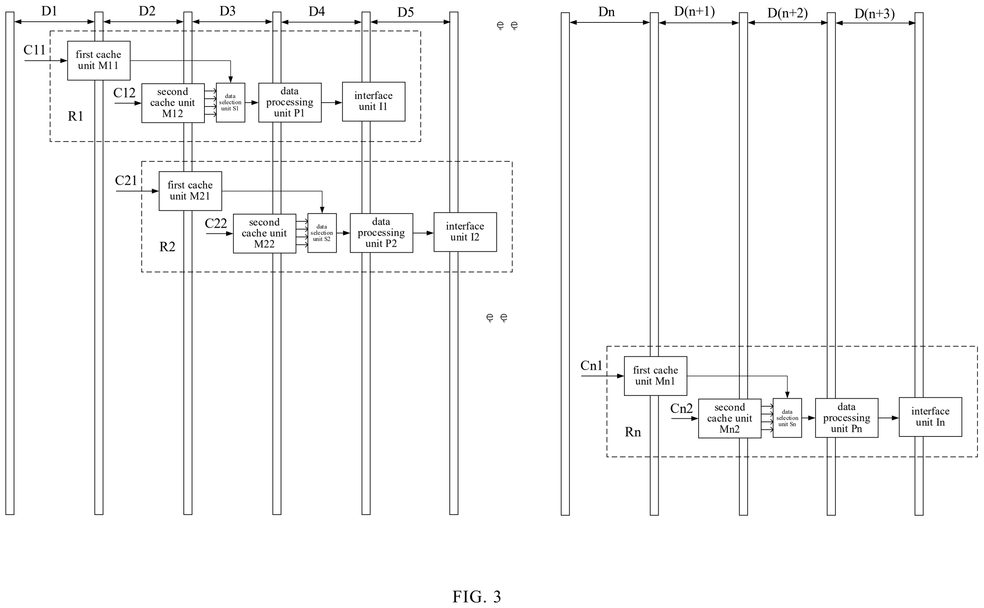

As shown in FIG. 3, the first layer structure R1 may further include a data selection unit S1, a data processing unit P1, and an interface unit I1, and the second layer structure R2 may further include a data selection unit S2, a data processing unit P2, and an interface unit I2. The n^{th} layer structure Rn may further include a data selection unit Sn, a data processing unit Pn, and an interface unit In. Therefore, four pipelines are occupied for the processing of the cache access instruction of one layer structure, five pipelines are occupied for the processing of the cache access instructions of two layer structures, and (n+3) pipelines are occupied for the processing of the cache access instructions of n layer structures.

In some embodiments, the first cache unit is physical address memory, and the second cache unit is data memory.

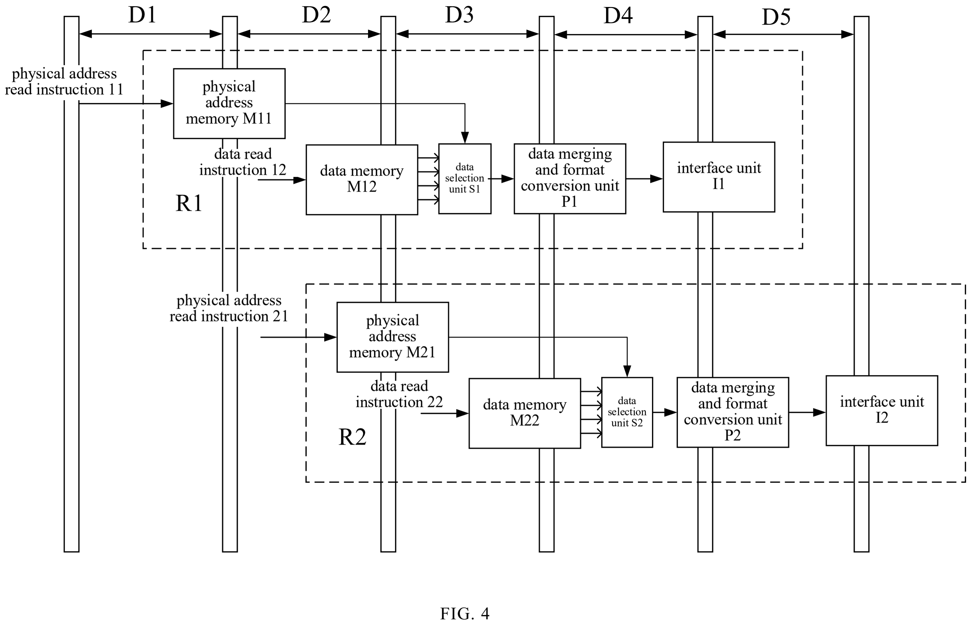

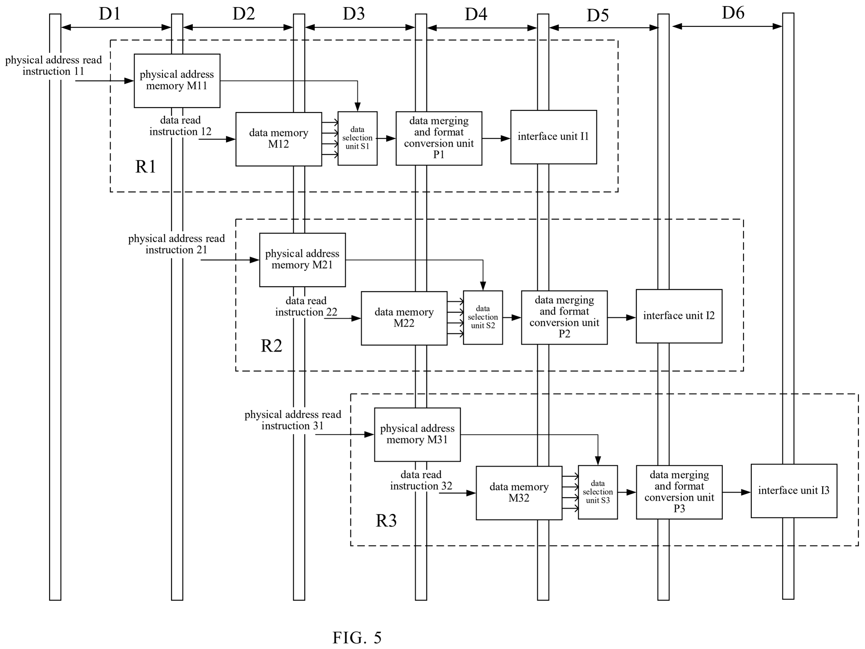

In order to clarify the technical solutions in the embodiments of the present disclosure, a cache including two layer structures and a cache including three layer structures are taken as examples and described below with reference to FIG. 4 and FIG. 5, respectively.

FIG. 4 is a schematic diagram of a cache including two layer structures according to an embodiment of the present disclosure. As shown in FIG. 4, the cache includes two layer structures, i.e., a first layer structure R1 and a second layer structure R2. The first layer structure R1 includes a physical address memory M11, a data memory M12, a data selection unit S1, a data merging and format conversion unit P1, and an interface unit I1. The second layer structure R2 includes a physical address memory M21, a data memory M22, a data selection unit S2, a data merging and format conversion unit P2, and an interface unit I2. Thus, overall cache capacity is doubled.

The first layer structure R1 and the second layer structure R2 are independently accessed in staged beats, that is, a physical address read instruction 11 of the first layer structure R1 accesses the physical address memory M11 in a pipeline D1, and a data read instruction 12 of the first layer structure R1 accesses the data memory M12 in a pipeline D2; and a physical address read instruction 21 of the second layer structure R2 accesses the physical address memory M21 in the pipeline D2, and a data read instruction 22 of the second layer structure R2 accesses the data memory M22 in a pipeline D3.

The first layer structure R1 and the second layer structure R2 perform processing independently. That is, data in the data memory M12 is selected and output by the data selection unit S1 and subjected to data merging and format conversion by the data merging and format conversion unit P1 in the pipeline D3, and then the data subjected to merging and format conversion is output by the interface unit I1 in the pipeline D4. Data in the data memory M22 is selected and output by the data selection unit S2 and subjected to data merging and format conversion by the data merging and format conversion unit P2 in the pipeline D4, and then the data subjected to merging and format conversion is output by the interface unit I2 in a pipeline D5.

Through expansion by one layer structure, a capacity of the cache is twice that of an existing cache.

FIG. 5 is a schematic diagram of a cache including three layer structures according to an embodiment of the present disclosure. As shown in FIG. 5, the cache includes three layer structures, i.e., a first layer structure R1, a second layer structure R2, and a third layer structure R3. The first layer structure R1 includes a physical address memory M11, a data memory M12, a data selection unit S1, a data merging and format conversion unit P1, and an interface unit I1. The second layer structure R2 includes a physical address memory M21, a data memory M22, a data selection unit S2, a data merging and format conversion unit P2, and an interface unit I2. The third layer structure R3 includes a physical address memory M31, a data memory M32, a data selection unit S3, a data merging and format conversion unit P3, and an interface unit I3. Thus, overall cache capacity is tripled.

The first layer structure R1, the second layer structure R2, and the third layer structure R3 are independently accessed in staged beats, that is, a physical address read instruction 11 of the first layer structure R1 accesses the physical address memory M11 in a pipeline D1, and a data read instruction 12 of the first layer structure R1 accesses the data memory M12 in a pipeline D2. A physical address read instruction 21 of the second layer structure R2 accesses the physical address memory M21 in the pipeline D2, and a data read instruction 22 of the second layer structure R2 accesses the data memory M22 in a pipeline D3. A physical address read instruction 31 of the third layer structure R3 accesses the physical address memory M31 in the pipeline D3, and a data read instruction 32 of the third layer structure R3 accesses the data memory M32 in a pipeline D4.

The first layer structure R1, the second layer structure R2, and the third layer structure R3 perform processing independently. That is, data in the data memory M11 is selected and output by the data selection unit S1 and subjected to data merging and format conversion by the data merging and format conversion unit P1 in the pipeline D3, and then the data subjected to merging and format conversion is output by the interface unit I1 in the pipeline D4. Data in the data memory M22 is selected and output by the data selection unit S2 and subjected to data merging and format conversion by the data merging and format conversion unit P2 in the pipeline D4, and then the data subjected to merging and format conversion is output by the interface unit I2 in a pipeline D5. Data in the data memory M32 is selected and output by the data selection unit S3 and subjected to data merging and format conversion by the data merging and format conversion unit P3 in the pipeline D5, and then the data subjected to merging and format conversion is output by the interface unit I3 in a pipeline D6.

Through expansion by two layer structures, a capacity of the cache is three time that of an existing cache.

An embodiment of the present disclosure further provides a data processing apparatus including the above cache.

In some embodiments, the data processing apparatus includes, but is not limited to: a CPU, a Graphics Processing Unit (GPU), an embedded neural Network Processing Unit (NPU), and a Data Processing Unit (DPU).

In some embodiments, the cache of the data processing apparatus is a Level 1 cache, or the cache of the data processing apparatus includes a Level 1 cache and a Level 2 cache.

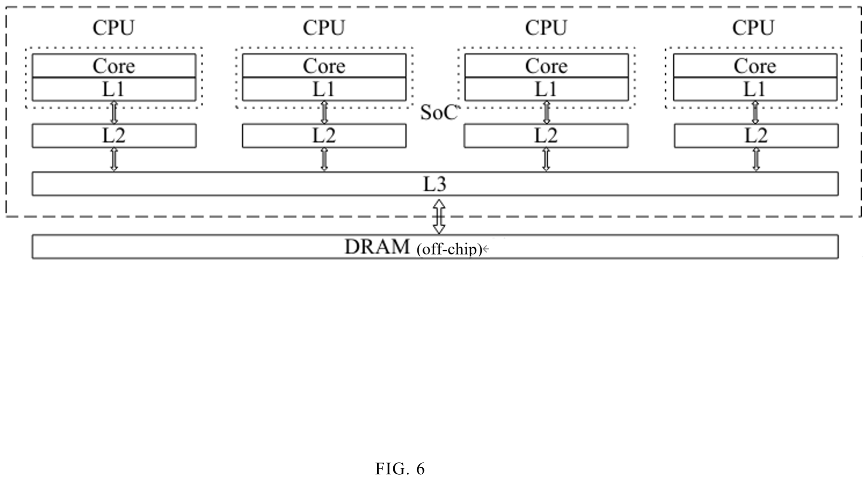

In a case where the data processing apparatus is a CPU, as shown in FIG. 6, the CPU may include a processing core Core, a Level 1 cache L1, and a Level 2 cache L2. L3 denotes a Level 3 cache, which is disposed in a System on Chip (Soc), and the Level 1 caches L1, the Level 2 caches L2, and the Level 3 cache L3 are interconnected stage by stage. It should be noted that the CPU may just include the processing core Core and the Level 1 cache L1, without including the Level 2 cache L2.

A relationship between capacity of each level of cache and memory access latency is shown in Table 1.

**Table 1**

| cache level | capacity | memory access latency |
|---|---|---|
| L1 | ≤128 KB | ~1 ns |
| L2 | ≤4 MB | ~5 ns |
| L3 | several MB | ~10 ns |

As can be seen from Table 1, in the SoC, the memory access latency of the Level 1 cache L1 of the CPU is the shortest, and performance of the Level 1 cache L1 is the best, so that increasing the capacity of the Level 1 cache L1 of the CPU may play a significant role in improving performance of the SoC. For reading data, the Level 1 cache L1 is searched first; if the data is not found, the Level 2 cache L2 is then searched; if the data is still not found, the Level 3 cache L3 or a memory is then searched. Therefore, performance of the data processing apparatus and that of a chip can be greatly improved by adopting the above cache including the expanded layer structures as the Level 1 cache L1.

An embodiment of the present disclosure further provides a chip including the above data processing apparatus.

In some embodiments, the chip may further include a Level 3 cache, and in a case where a plurality of data processing apparatuses are provided, each data processing apparatus is connected to the Level 3 cache. It should be noted that the above cache may be adopted as the Level 3 cache.

As shown in FIG. 6, the chip is an SoC, the data processing apparatus is a CPU, each CPU includes a Level 1 cache L1 and a Level 2 cache L2, and the chip further includes a Level 3 cache L3. The Level 1 cache L1 of each CPU is cascaded with the Level 2 cache L2 of the same CPU, and the Level 2 cache L2 of each CPU is respectively cascaded with the Level 3 cache L3. The SoC is connected to an off-chip Dynamic Random Access Memory (DRAM) via the Level 3 cache L3.

The cache provided in the embodiments of the present disclosure can be applied to high-performance CPUs in compute-intensive fields such as cloud computing, scientific computing, and AI, and can improve performance of the CPUs, that is, performance of the chips, by improving cache capacity. It should be noted that the cache is not limited to the application to the high-performance CPUs, and can be applied to any CPU using a cache. The cache including the plurality of layer structures according to the embodiments of the present disclosure does not affect high-frequency implementation of the CPUs, has high expandability and applicability, and can produce a significant CPU performance improvement effect by improving the cache capacity.

It should be understood by those of ordinary skill in the art that the functional modules/units in all or some of the operations, and the devices in the methods disclosed above may be implemented as software, firmware, hardware, or suitable combinations thereof. If implemented as hardware, the division between the functional modules/units stated above is not necessarily corresponding to the division of physical components; for example, one physical component may have a plurality of functions, or one function or operation may be performed through cooperation of several physical components. Some or all of the physical components may be implemented as software executed by a processor, such as a central processing unit, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable media used in any method or technology for storing information (such as computer-readable instructions, data structures, program modules and other data). The computer storage medium includes, but is not limited to, an RAM, a Read-Only Memory (ROM), an Electrically Erasable Programmable Read-Only Memory (EEPROM), a flash memory or other memory techniques, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication media generally include computer-readable instructions, data structures, program modules, or other data in modulated data signals such as carrier wave or other transmission mechanism, and may include any information delivery medium.

The present disclosure discloses the exemplary embodiments using specific terms, but the terms are merely used and should be merely interpreted as having general illustrative meanings, rather than for the purpose of limitation. Unless expressly stated, it is apparent to those of ordinary skill in the art that features, characteristics and/or elements described in connection with a particular embodiment can be used alone or in combination with features, characteristics and/or elements described in connection with other embodiments. Therefore, it should be understood by those of ordinary skill in the art that various changes in the forms and the details can be made without departing from the scope of the present disclosure of the appended claims.

## Claims

1. A cache, comprising:
at least two layer structures,
wherein each of the at least two layer structures comprises: a first cache unit and a second cache unit, first cache access instructions of different layer structures enter different pipelines to access the first cache units in corresponding layer structures, and second cache access instructions of the different layer structures enter different pipelines to access the second cache units in corresponding layer structures.

2. The cache of claim 1, wherein sequence numbers of the pipelines entered by the first cache access instruction of each of the at least two layer structures gradually increase, and sequence numbers of the pipelines entered by the second cache access instruction of each of the at least two layer structures gradually increase.

3. The cache of claim 1, wherein a pipeline entered by the first cache access instruction of an n^{th} layer structure in the at least two layer structures is a pipeline immediately following a pipeline entered by the first cache access instruction of an (n-1)^{th} layer structure in the at least two layer structures;
a pipeline entered by the second cache access instruction of the n^{th} layer structure is a pipeline immediately following a pipeline entered by the second cache access instruction of the (n-1)^{th} layer structure;
wherein n is a number of the at least two layer structures.

4. The cache of claim 1, wherein
each of the at least two layer structures further comprises: a data selection unit, a data processing unit, and an interface unit,
the data selection unit is configured to perform selection on second data based on first data to obtain target data, wherein the first data is obtained by accessing the first cache unit in a corresponding layer structure according to the first cache access instruction of the layer structure, and the second data is obtained by accessing the second cache unit in the layer structure according to the second cache access instruction of the layer structure; and
the data processing unit is configured to merge the target data with third data, perform format conversion on the merged data to obtain fourth data, and send the fourth data to the interface unit.

5. The cache of any one of claims 1 to 4, wherein the first cache unit is physical address memory, and the second cache unit is data memory.

6. A data processing apparatus, comprising the cache of any one of claims 1 to 5.

7. The data processing apparatus of claim 6, wherein the cache is a Level 1 cache, or the cache comprises a Level 1 cache and a Level 2 cache.

8. The data processing apparatus of claim 6, wherein the data processing apparatus is at least one of a Central Processing Unit, a Graphics Processing Unit, an embedded neural Network Processing Unit, or a Data Processing Unit.

9. A chip, comprising the data processing apparatus of any one of claims 6 to 8.

10. The chip of claim 9, further comprising a Level 3 cache, the data processing apparatus comprising a plurality of data processing apparatuses, and the Level 3 cache is connected to the plurality of data processing apparatuses.
